# EUROPEAN PATENT APPLICATION

(11) **EP 4 748 601 A1**
(43) Date of publication of application: **27.05.2026**
(21) Application number: 25217647.4
(22) Date of filing: 21.11.2025
(51) Int. Cl.: B60J 7/14

(54) **CONVERTIBLE MOTOR VEHICLE WITH RETRACTABLE HARDTOP AND METHOD FOR FOLDING A RETRACTABLE HARDTOP FOR A MOTOR VEHICLE**

(30) Priority: 22.11.2024 IT 202400026400
(71) Applicant: FERRARI S.p.A., 41100 Modena (IT)
(72) Inventor: CALTAGIRONE, Alessandro, 41100 MODENA (IT); SELMI, Simone, 41100 MODENA (IT); BARNINI, Michele, 41100 MODENA (IT)
(74) Representative: Studio Torta S.p.A.

(57) **Abstract**

A motor vehicle (1) is described with a body (2), a passenger compartment (4), a front and a rear (5, 6) and a hardtop (3); the motor vehicle (1) can be switched to a first configuration, in which the hardtop (3) is fully extended and arranged so as to cover the passenger compartment (4) and a second configuration in which the hardtop (3) is fully folded and housed inside the rear (6); the hardtop (3) comprises a first panel (10); and a pair of second panels (11); the first panel (10) comprises a first portion (18) and a second portion (19); the first portion (18) is interposed between the front (5) and the second portion (19) and the second portion (19) is interposed between the first portion (18) and the rear (6); the second portion (19) is tapered, proceeding from the first portion (18) to the rear (6) moving parallel to the first axis (X), and interposed along said second axis (Y) between the second panels (11).

## Description

### CROSS-REFERENCE TO RELATED APPLICATIONS

This patent application claims priority from Italian patent application no. 102024000026400 filed on November 22, 2024, the entire disclosure of which is incorporated herein by reference.

### TECHNICAL FIELD

The present invention concerns a convertible motor vehicle with a retractable hardtop and method for folding a retractable hardtop for a motor vehicle.

### BACKGROUND

Convertible motor vehicles are known, namely comprising essentially:
- a body defining a passenger compartment intended to accommodate a driver and any passengers, a front and a rear arranged respectively at the front and at the back of the passenger compartment; and
- a retractable hardtop.

The convertible motor vehicle also has a longitudinal axis parallel to a normal direction of travel of the motor vehicle, and a transverse axis horizontal and orthogonal to the longitudinal axis.

The convertible motor vehicle can selectively take on:
- a first cabriolet configuration, in which the hardtop is extended and arranged so as to cover the passenger compartment; and
- a second coupé configuration, in which the passenger compartment is open at the top.

In further detail, the rear of the motor vehicle defines a storage compartment and comprises hatch selectively movable between an open position in which it provides access to the storage compartment and a closed position in which it obstructs access to the storage compartment.

The motor vehicle further comprises a mechanism that can be selectively operated from the inside of the motor vehicle during travel so as to determine the transition from the first configuration to the second configuration.

More precisely, to determine said transition, operation of the mechanism causes movement of the door from the closed position to the open position, folding and subsequent movement of the hardtop folded inside the storage compartment, and movement of the door from the open position to the closed position.

In order to accommodate the retractable hardtop folded in the storage compartment, the motor vehicles of known type have significant overall dimensions at the rear parallel to the transverse axis of the motor vehicle.

Said overall dimensions determine inevitable constraints that penalize aerodynamic performance.

In fact, said overall dimensions inevitably penalize the overall aerodynamic resistance coefficient of the motor vehicle, increasing overall consumption with equal performance.

Said penalization is even more severe in the case of high-performance convertible electric motor vehicles. In fact, the limited electrical energy density levels stored in today's electric batteries result in a limited autonomy, which can be partly increased by reducing the overall aerodynamic resistance of the motor vehicle.

Said overall dimensions, furthermore, limit the freedom of the designer in conception of the overall shape of the motor vehicle and resulting style.

The need is felt in the sector to provide a convertible motor vehicle with the lowest possible overall aerodynamic resistance.

The need is also felt for maximum freedom in design of the rear portion, so that the motor vehicle can be produced in the desired style.

### SUMMARY

The object of the present invention is to provide a convertible motor vehicle with hardtop, which meets at least one of the above-mentioned needs.

The above-mentioned object is achieved by the present invention, which concerns a convertible motor vehicle with hardtop, as defined in claim 1.

The present invention also concerns a method for folding a hardtop for a convertible motor vehicle, as defined by claim 8.

### BRIEF DESCRIPTION OF THE FIGURES

For a better understanding of the present invention, a preferred embodiment is described below, by way of nonlimiting example and with reference to the attached drawings in which:
- figure 1 is a perspective view of a convertible motor vehicle with a retractable hardtop produced according to the present invention, with parts removed for clarity in a first coupé configuration and with the retractable hardtop in the extended configuration;
- figure 2 is a lateral view of the motor vehicle of figure 1, with parts removed for clarity;
- figure 3 illustrates an overhead view of the retractable hardtop in the extended configuration;
- figure 4 illustrates in lateral view the motor vehicle of figures 1 and 2 during a first folding step of the retractable hardtop and with the hardtop in a first partially folded configuration;
- figure 5 illustrates in an overhead view the retractable hardtop in a partially folded configuration; and
- figure 6 illustrates in a lateral view the motor vehicle of figures 1, 2 and 4 in a second cabriolet configuration and with the retractable hardtop in a fully folded configuration.

### DESCRIPTION OF EMBODIMENTS

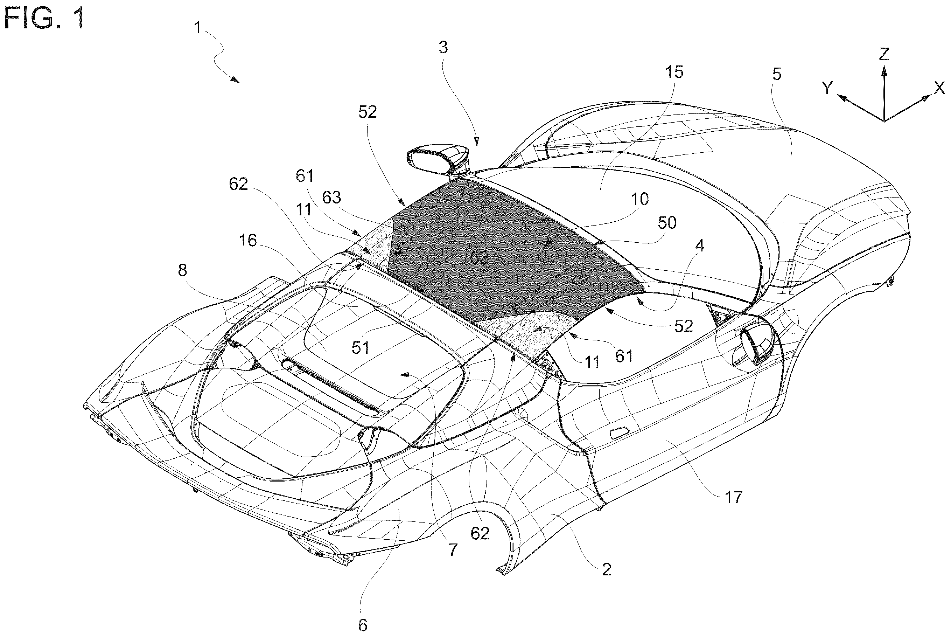

With reference to Figures 1 to 6, the number 1 indicates a motor vehicle comprising a body 2 and a rigid retractable roof 3 commonly known as retractable hardtop.

The following can also be defined:
- a longitudinal axis X integral with the motor vehicle 1, arranged, in use, horizontal and parallel to a normal direction of travel of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

In the following part of the present description, expressions such as "at the top", "at the bottom", "at the front", "at the rear" and similar are used with reference to conditions of normal travel of the motor vehicle 1.

Furthermore, in the following part of the present description, the expression "main extension" of an edge along an axis is used to indicate that the edge can also be slightly curved but has a length parallel to the above-mentioned axis.

The body 2 essentially comprises:
- a passenger compartment 4 intended to be occupied by a driver and by any passengers; and
- a front 5 and a rear 6 arranged respectively at the front and rear of the passenger compartment 3.

In further detail, the body 2 comprises, in turn:
- a windscreen 15 delimiting the passenger compartment 4 at the front;
- a backrest 16 opposite the windscreen 15 and delimiting the passenger compartment 4 at the rear; and
- a pair of doors 17, movable between a closed position in which they delimit laterally the passenger compartment 4 and extend between the windscreen 15 and the backrest 16, and an open position in which they allow exit from the passenger compartment 4.

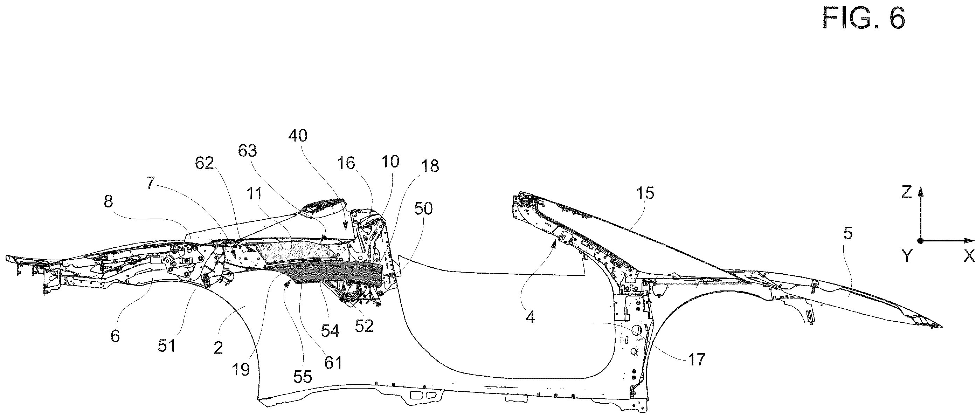

The convertible motor vehicle 1 can selectively take on:
- a coupé configuration (figure 1), in which the hardtop 3 is in a fully extended configuration and arranged so as to cover the passenger compartment 4; and
- a cabriolet configuration (figure 6), in which the passenger compartment 4 is open at the top and the hardtop 3 is in a fully folded configuration inside the rear 6.

In further detail, the rear 6 of the motor vehicle 1 defines a storage compartment 7, and comprises a hatch 8 that can be selectively moved between an open position in which it provides access to the storage compartment 7 and a closed position in which it obstructs access to the storage compartment 7.

The motor vehicle 1 comprises a mechanism that can be selectively operated from the inside of the motor vehicle during travel so as to determine shifting of the hatch 8 from the closed position to the open position, folding and subsequent movement of the hardtop 3 to the fully folded position inside the storage compartment 7, and movement of the hatch 8 from the open position to the closed position.

Said mechanism is not illustrated since it does not form part of the present invention.

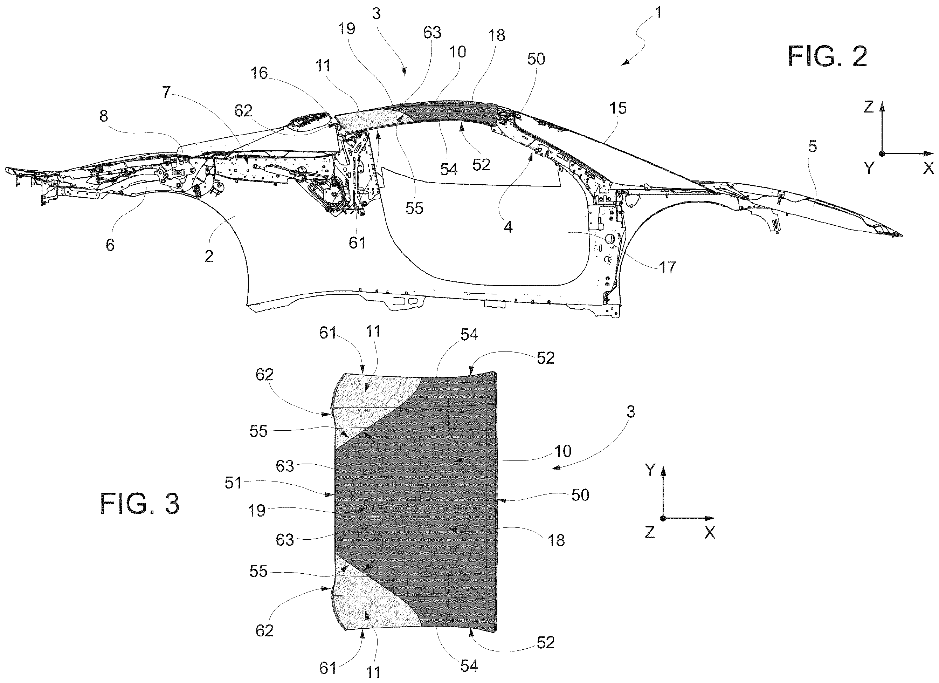

Advantageously, the hardtop 3 comprises, in turn, with reference to the fully extended configuration and in a plan view orthogonal to the axis Z (Figure 3):
- a panel 10; and
- a pair of panels 11;

the panel 10 comprises, in turn, a portion 18 and a portion 19; the portion 18 is interposed along the axis X between the front 5 and the portion 19, and the portion 19 is interposed along the axis X between the portion 18 and the rear 6;
the portion 19 is tapered proceeding from the portion 18 to the rear 6, proceeding parallel to the axis X, and is interposed between the panels 11.

In further detail, the panels 11 are triangular.

In the following part of the present description, the hardtop 3 is described with reference to the fully extended position illustrated in figure 3, in which the motor vehicle 1 is in the cabriolet configuration.

The panel 10 comprises, more precisely:
- a front end edge 50;
- a rear end edge 51 opposite the edge 50 parallel to the axis X; and
- a pair of lateral end edges 52 opposite each other parallel to the axis Y and each extending between a respective lateral end of the edge 50 and a respective lateral end of the edge 51.

Each edge 52 comprises, in particular, proceeding from the edge 10 towards the edge 51:
- a segment 54 substantially parallel to the axis X; and
- a segment 55 oblique to the axis x.

The segments 55 converge towards each other, proceeding from the segment 54 towards the edge 51.

The portion 18 is delimited at the front by the edge 10 and laterally by the segments 54 of the edges 52.

The portion 19 is delimited laterally by the segments 55 of the edges 52 and at the rear by the edge 11.

Each panel 11 comprises, in turn:
- an edge 61 contiguous with the segment 54 of a respective edge 52 and defining an extension of said segment 55;
- an edge 62 contiguous with the edge 51 on a respective side of the panel 10 and defining an extension of said edge 51; and
- an edge 63 interposed in contact between the edges 61, 62 and arranged so as to strike against the segment 55 of a respective edge 52.

In particular, the edge 51 of the panel 10 is interposed between the edges 62 of the edge 51 parallel to the axis Y.

The edge 51 of the panel 10 furthermore has a length parallel to the axis Y greater than the length of the edges 62 parallel to the axis Y.

With reference to the fully extended configuration of the hardtop 3 illustrated in Figure 3:
- the edge 50 of the panel 10 delimits at the front the hardtop 3 and is arranged so as to strike against an upper end of the windscreen 15;
- the edge 51 of the panel 10 and the edges 62 of the panels 11 delimit at the rear the hardtop 3 and the edge 51 is arranged so as to strike against an upper end of the backrest 16; and
- the segments 54 of the edges 52 of the panel 10 and the edges 61 of the panels 11 delimit laterally the hardtop 3 and are arranged so as to strike against respective upper ends of corresponding doors 17.

In the case illustrated, the edges 50, 51 of the panel 10 and the edges 62 have their main extension parallel to the axis Y.

The edges 61 of the panels 11 have their main extension parallel to the axis X.

The edges 63 of the panels 11 extend obliquely to the axis X.

The edges 62 of the panels 11 extend parallel to the axis Y.

The panels 10, 11 are arranged symmetrically to the axis X also in the fully extended configuration of the hardtop 3.

The folding of the hardtop 3 is illustrated below starting from the condition illustrated in Figures 1 to 3, in which the motor vehicle 1 is in the cabriolet configuration and the hardtop 3 is in the fully extended configuration in which it fully covers the passenger compartment 4.

In further detail, as illustrated in Figure 3, in said condition the portion 18 of the panel 10 is arranged at the front of the panels 11, and the portion 19 is interposed between the panels 11 along the axis Y.

The hardtop 3 is delimited at the front by the edge 50 of the panel 10, at the rear by the edge 51 and by the edges 62 of respective panels 11, and laterally by the segments 54 of corresponding edges 52 of the panel 10 and by the segments 61 of respective panels 11.

The edges 63 of the panels 11 are arranged so as to strike against respective segments 55 of the edges 52 of the panel 10.

The hatch 8 is arranged so as to cover the storage compartment 7, as illustrated in Figures 1 and 2.

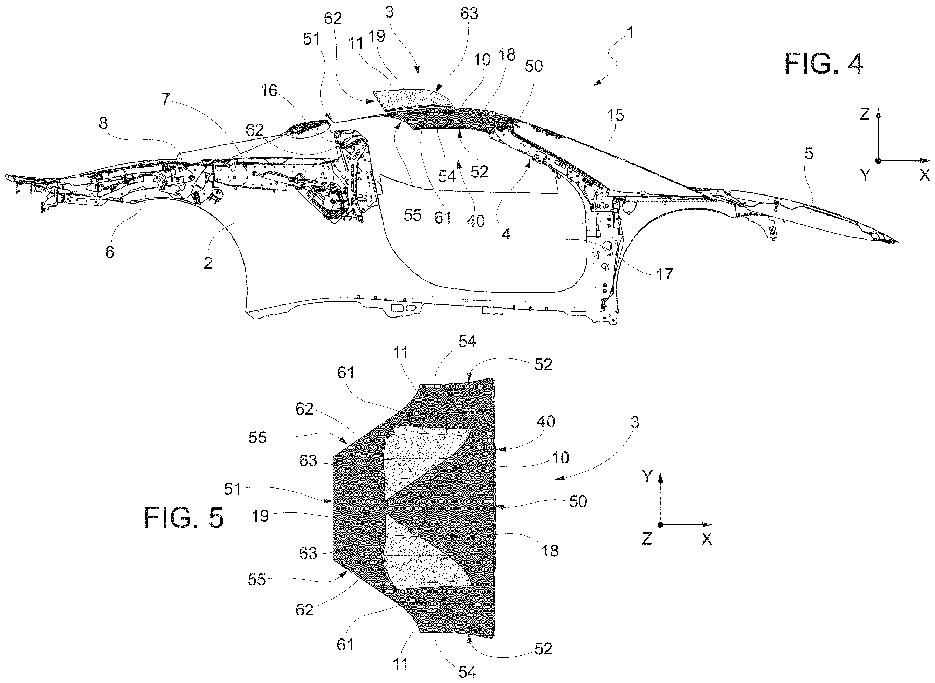

Following the activation of a command from the inside of the motor vehicle 1, the mechanism moves the panels 11 towards each other and both the panels 11 towards the front 5 and the panel 10 until the panels 11 are arranged overlapping the panel 10, as illustrated in Figures 4 and 5.

During said movement, the panel 10 remains at a standstill in the same position as in the fully extended configuration.

Following this movement, the panel 11 overlapping the panel 10 and the panel 10 itself form an assembly 40 (Figures 4 to 6).

The assembly 40 defines a partially folded configuration of the hardtop 3 intermediate between the fully extended configuration and the fully folded configuration.

In particular, the panels 11 partly overlap the portion 18 of the panel 10 and partly the portion 19 of the panel 10.

The edges 61, 62, 63 of the panels 11 overlapping the panel 10 are interposed at a distance along the axis X between the edges 50, 51 of the panel 10.

The panels 11 are arranged symmetrically to the axis X also in the partially folded configuration of the hardtop 3.

With reference to the plan view of the motor vehicle 1 orthogonal to the axis Z, the partially folded configuration is obtained by translation of the panels 11 parallel to the axis Y by the same distance and integral translation of the panels 11 parallel to the axis X.

Below, the assembly 40 is further rotated-translated around the axis X and towards the rear 6 until it is arranged inside the storage compartment 7 of the rear 6, with the panel 10 arranged at the bottom of the panels 11 (Figure 6).

At this point, the hardtop 3 is arranged in the fully folded configuration.

The hatch 8 is re-set to the closing position of the storage compartment 7.

At this point, the motor vehicle 1 is in the cabriolet configuration of figure 6.

The motor vehicle 1 is switched from the cabriolet configuration of figure 6 to the coupé configuration of Figure 1 by carrying out the above-mentioned operations in reverse order. In short, the hatch 8 is set to the open position, the assembly 40 is overturned to the outside of the storage compartment until reaching the partially folded configuration (Figures 4 and 5), and the hardtop 3 is brought from the partially folded configuration to the fully extended configuration (Figures 2 and 3).

From an examination of the motor vehicle 1 and the folding method of the hardtop 3 according to the invention, the advantages it offers are evident.

In particular, the hardtop 3 comprises the panel 10 and the panels 11.

The panel 10 is arranged in front of the panels 11 and the panels 11 are arranged laterally to the panel 11 in the fully extended configuration (Figures 1 to 3).

The panels 11 are arranged at the top of the panel 10 so as to form the assembly 40 in the first partially folded configuration of the hardtop 3. The assembly 40 is then arranged inside the storage compartment 8, thus arranging the hardtop 3 in the fully folded configuration.

Said flexibility of movement allows a motor vehicle 1 to be produced with limited overall dimensions parallel to the axis Y of the hardtop 3 in the fully folded configuration, consequently also limiting the minimum overall dimensions parallel to the axis Y of the rear 6 of the corresponding motor vehicle 1.

It is thus possible to reduce the overall aerodynamic resistance of the motor vehicle 1 and at the same time reduce the constraints to be observed in conception of the shape and style of the motor vehicle 1.

Lastly it is clear that modifications and variations can be made to the motor vehicle 1 and to the method of folding the hardtop 3 according to the present invention without departing from the protective scope defined by the claims.

## Claims

1. A convertible motor vehicle (1) comprising:
- a body (2);
- a passenger compartment (4);
- a front and a rear (5, 6) located at the front and at the back, respectively, of said passenger compartment (4), with reference to a normal travel direction of said motor vehicle (1); and
- a retractable hardtop (3);
said motor vehicle (1) further having:
- a first axis (X), which is oriented from said front (5) to said rear (6) and is parallel to a normal travel direction of said motor vehicle (1); and
- a second axis (Y) arranged, in use, horizontal and orthogonal to said first axis (X);
said motor vehicle (1) being capable of being selectively switched to:
- a first configuration, in which said hardtop (3) is in a second fully extended configuration so as to cover said passenger compartment (4);
- a third configuration in which said hardtop (3) is in a fourth configuration fully folded and housed within said rear (6) and said passenger compartment (4) is open;
**characterized in that** said hardtop (3) comprises, with reference to said normal travel direction of said motor vehicle (1) and to said third fully extended configuration and in a plan view orthogonal to a third axis (Z) transverse to said first and second axis (X, Y):
- a first panel (10); and
- a pair of second panels (11);
said first panel (10) comprising, in turn:
- a first portion (18); and
- a second portion (19);
said first portion (18) being interposed, along said first axis (X), between said front (5) and said second portion (19) and said second portion (19) being interposed, along said first axis (X), between said first portion (18) and said rear (6);
said second portion (19) being tapered, proceeding from said first portion (18) to said rear (6) and moving parallel to said first axis (X), and being interposed, along said second axis (Y), between said second panels (11).

2. The motor vehicle according to claim 1, **characterized in that**, with reference to said normal travel direction of said motor vehicle (1) and in said plan view orthogonal to said third axis (Z):
said first panel (10) comprises a first front end edge (50), a second rear end edge (51) opposite said first edge (50) parallel to said first axis (X) and a pair of third side edges (52) opposite one another and each extending between said first edge and said second edge (50, 51);
each third edge (52) comprising, in turn, a first front segment (54) laterally delimiting said first portion (18) and a second rear segment (55) laterally delimiting said second portion (19);
each second panel (11) comprising, in turn:
- a fourth edge (61) contiguous with said first segment (54) of the respective third edge (51) of said first panel (10);
- a fifth edge (62) contiguous with the respective second edge (51) of said first panel (10); and
- a sixth edge (63) arranged so as to strike against said second segment (55) of a respective third edge (52) of said first panel (10).

3. The motor vehicle according to claim 2, **characterized in that** said sixth edge (63) and said third edge (52) are inclined relative to said first axis (X) and converge towards one another, proceeding from said front (5) towards said rear (6).

4. The motor vehicle according to claim 2 or 3, **characterized in that** each third panel (11) is triangular and each said sixth edge (63) extends between the respective fourth edge (61) and fifth edge (62).

5. The motor vehicle according to any one of the claims from 2 to 4, **characterized in that** said second edge (51) has a first length parallel to said second axis (Y) and said fifth edge (62) has a second length, which is shorter than said first length, parallel to said second axis (Y).

6. The motor vehicle according to any one of the preceding claims, **characterized in that** said second panels (11) are at least partly movable on said first panel (10) so as to place said hardtop (3) in a fifth partially folded configuration, which is intermediate between said second fully extended configuration and said fourth fully folded configuration;
said second panels (11) being shifted towards one another parallel to said second axis (Y) and being shifted integrally to said first axis (X), in said fifth partially folded configuration relative to said third extended configuration in said plan view.

7. The motor vehicle according to claim 6, **characterized in that**, in said fifth partially folded configuration of said hardtop (3), said second panels (11) are interposed between said first and second edge (50, 51) of said first panel (10) of said hardtop (3) parallel to said first axis (X).

8. A method for folding a retractable hardtop (3) for a motor vehicle (1), said motor vehicle (1) comprising:
- a body (2);
- a passenger compartment (4);
- a front and a rear (6, 7) located at the front and at the back, respectively, relative to said passenger compartment (4);
said motor vehicle (1) further having:
- a first axis (X), which is oriented from said front (6) to said rear (7) and is parallel to a normal travel direction of said motor vehicle (1); and
- a second axis (Y) arranged, in use, horizontal and orthogonal to said first axis (X);
said hardtop (3) comprising, in turn:
- a first panel (10); and
- a pair of second panels (11);
said first panel (10) comprising, in turn:
- a first portion (18); and
- a second portion (19);
said method comprising the steps of:
i) switching said motor vehicle (1) between a first configuration, in which said hardtop (3) is in a second fully extended configuration and is arranged so as to cover said passenger compartment (4), and a third configuration, in which said hardtop (3) is in a fourth fully folded configuration and is housed within said rear (6) and said passenger compartment (4) is open;
ii) moving, when said hardtop (3) is in said second configuration and with reference to a normal travel direction of said motor vehicle (1) extending parallel to said first axis (X) and oriented from said rear (6) towards said front (5),
- said first portion (19) to a position interposed, along said first axis (X), between said front (5) and said second portion (18), and
- said second portion (18) to a position interposed, along said first axis (X), between said first portion (18) and said rear (6); said second portion (19) being tapered proceeding from said first portion (18) to said rear (6) moving parallel to said first axis (X);
- said second portion (19) to a position interposed, along said second axis (Y), between said second panels (11).

9. The method according to claim 8, **characterized in that** said step i) comprises the step iii) of at least partly placing said second panels (11) on said first panel (10) so as to form an assembly (40) and switching said hardtop (3) to a fifth partially folded configuration, which is intermediate between said third and fourth configuration.

10. The method according to claim 9, **characterized in that** said step iii) comprises the step iv) of moving said second panels (11) closer together and of moving said second panels (11) towards said front panel (5) of said motor vehicle (1).

11. The method according to claim 9 or 10, **characterized in that** said step iii) comprises the step v) of placing said second panels (11) partly above said first portion (18) and partly above said second portion (19) of said first panel (10).

12. The method according to any one of the claims from 9 to 11, **characterized in that** said step i) comprises the step vi) of placing said assembly (40) inside said rear (6) so as to move said hardtop (3) to said fourth fully folded configuration.

13. The method according to any one of the claims from 9 to 12, **characterized in that** said step vi) comprises the step vii) of rotating-translating said second panels (11) around said second axis (Y) and towards said rear (6) and of holding said second panels (11) on top of said first panel (10) in said fourth fully folded configuration, during the transition from said fifth partially folded configuration to said fourth fully folded configuration.
